# EUROPEAN PATENT APPLICATION

(11) **EP 4 661 167 A1**
(43) Date of publication of application: **10.12.2025**
(21) Application number: 25172289.8
(22) Date of filing: 24.04.2025
(51) Int. Cl.: H01M 50/107, H01M 50/152, H01M 50/184, H01M 50/186, H01M 50/188, H01M 50/593, H01M 50/567

(54) **SECONDARY BATTERY**

(30) Priority: 07.06.2024 CN 202421306127 U
(71) Applicant: AESC Japan Ltd., Yokohama-Shi, Kanagawa 220-0012 (JP)
(72) Inventor: WANG, Zhen, Jiangyin City, Wuxi City 214443 (CN)
(74) Representative: Becker, Eberhard

(57) **Abstract**

A secondary battery (100) including a housing (110), an electrode assembly (120) disposed inside the housing (110), a pole (140), and an insulating member (150) is provided. The housing (110) includes an end wall (111) and a sidewall (112) surrounding the end wall (111). The pole (140) is fixed to the end wall (111) and electrically connected to the electrode assembly (120). The pole (140) includes a columnar part (142) passing through the pole hole (1111), and an inner flange (141) located inside the housing (110) and extending from the columnar part (142) towards the periphery of the end wall (111). The insulating member (150) is located on one side of the end wall (111) facing the interior of the housing (110). The insulating member (150) includes a first insulator (151) surrounding the columnar part (142) and a second insulator (152) surrounding the first insulator (151).

## Description

### BACKGROUND

### Field of the Disclosure

The present disclosure relates to battery technology, specifically to a secondary battery, a battery assembly, and an electronic device.

### Description of Related Art

At present, columnar components are commonly utilized across various industries due to their numerous advantages, including but not limited to: mature manufacturing processes, high yield rates of quality products, low processing costs, superior safety performance, and excellent heat dissipation properties.

In existing cylindrical batteries, insulation between the end wall and the electrode assembly, as well as between the end wall and the pole, is typically achieved through the use of an insulating member. The insulating member is generally of unitary design. However, the insulation requirements between the end wall and the electrode assembly differ from those between the end wall and the pole, resulting in disparate performance demands on the insulating member. The unitary design presents significant challenges and limited flexibility in terms of structural design and material selection to meet these distinct requirements.

### SUMMARY OF THE DISCLOSURE

Given the drawbacks of the existing technology mentioned above, the present disclosure provides a secondary battery, a battery assembly, and an electronic device to improve the poor flexibility in structural design and material selection, addressing the technical problem of failing to meet different requirements.

To achieve the above-mentioned purpose and other related purposes, the present disclosure provides a secondary battery, including: a housing, an electrode assembly, a pole, and an insulating member. The housing includes an end wall and a sidewall surrounding the end wall, and the end wall is provided with a pole hole. The electrode assembly is disposed inside the housing. The pole is fixed to the end wall. The pole includes a columnar part and an inner flange. The columnar part passes through the pole hole, the inner flange is located inside the housing and extends from the columnar part towards the periphery of the end wall. The insulating member is at least partially located on one side of the end wall facing the interior of the housing. The insulating member includes a first insulator and a second insulator separated from each other. The first insulator surrounds the columnar part and is at least partially clamped between the inner flange and the end wall. At least part of the second insulator surrounds the first insulator. The first insulator and the second insulator isolate the electrode assembly from the end wall.

In the above technical solution, designing the insulating member as the first insulator and the second insulator which are discrete may achieve individual structural design of the first insulator and the second insulator according to requirements. Such design also facilitates the selection of different structures or materials based on different requirements in terms of structural requirement, insulation requirement, and heat resistance requirement. In this way, it is possible to reduce the difficulty in design and component molding, and improves the flexibility of the design.

In an embodiment of the secondary battery of the present disclosure, the projection of the first insulator and the projection of the second insulator on the end wall at least partially overlap each other along the thickness direction of the end wall. The first insulator includes a first overlapping part that overlaps with the second insulator, and the second insulator includes a second overlapping part that overlaps with the first insulator.

In the above technical solution, an area where the projection of the first insulator and the projection of the second insulator on the end wall at least partially overlap each other is the connection part of the first insulator and the second insulator. This arrangement, on one hand, creates a specific connection relationship between the two, improving the stability of installation, while reducing the risk of contact between the electrode assembly and the end wall due to the gap in radius direction between the first insulator and the second insulator on the other hand, thereby enhancing the insulation performance of the first insulator and the second insulator between the end wall and the electrode assembly.

In an embodiment of the secondary battery of the present disclosure, the second overlapping part is located between the first overlapping part and the end wall.

In the above technical solution, the second overlapping part is located between the first overlapping part and the end wall. While the inner flange presses the first insulator towards the end wall, the second insulator may be pressed against the end wall by the first insulator. This improves the stability of configuring the second insulator, thereby enhancing safety performance.

In an embodiment of the secondary battery of the present disclosure, the first overlapping part and the second overlapping part overlap to form a connection part along the thickness direction of the end wall. The first insulator and/or the second insulator includes a thinning structure for reducing the thickness of the overlapping part.

In the above technical solution, the arrangement of the thinning structure may reduce the thickness of the overlapping part. On one hand, such design improves the flatness of the overlapping part, and on the other hand, it reduces the space occupied by the connection part in the height direction of the secondary battery.

In an embodiment of the secondary battery of the present disclosure, the thinning structure includes a first thinned area disposed at the outer periphery of the first insulator, and the first overlapping part is located in the first thinned area.

In the above technical solution, by setting a first thinned area at the outer periphery of the first insulator, on one hand, the flatness of the connection part is improved, and on the other hand, it is possible to achieve a reduction in the space occupied by the connection part in the height direction of the secondary battery.

In an embodiment of the secondary battery of the present disclosure, a first step that is indented in a direction away from the end wall is disposed near the outer periphery on one side of the first insulator facing the end wall, thus forming the first thinned area.

In the above technical solution, by setting a first step on one side of the first insulator facing the end wall to form a thinned area, one side of the first insulator close to the electrode assembly is made into a plane, which ensures the flatness of the pressing surface of the inner flange, improving the stability of the pressing action of the inner flange.

In an embodiment of the secondary battery of the present disclosure, the first step includes a first lateral surface surrounding the columnar part and a first bottom wall connected to the bottom end of the first lateral surface. The angle α between the first lateral surface and the first bottom wall is in a range that 90°<α<180°.

In the above technical solution, setting the angle within the above range may alleviate stress concentration between the first bottom wall and the first lateral surface, and facilitate demolding during the molding process.

In an embodiment of the secondary battery of the present disclosure, along the radius direction of the end wall, the distance from the outer periphery of the inner flange to the axis of the pole is x, the distance from the edge of the first lateral surface away from the first bottom wall to the axis of the pole is y, the difference between x and y is a, and the absolute value of a ranges from 0mm to 3mm.

In the above technical solution, setting the absolute value of a within the range of 0mm to 3mm may achieve a closer radius distance between the second overlapping part and the inner flange, allowing the second overlapping part to receive greater pressing force from the inner flange, which is beneficial for improving the sealing performance of the insulator.

In an embodiment of the secondary battery of the present disclosure, the distance between the inner surface of the second overlapping part and the outer periphery of the first lateral surface along the radius direction of the end wall is b, and the range of b is 0.2mm to 3mm.

In the above technical solution, setting b within the range of 0.2mm to 3mm may improve the situation where, when the pole is riveted, the first insulator deforms in radius direction due to radius force. This setting improves the condition where the first insulator, when compressed and deformed in radius direction, will not exert excessive pressure on the second insulator, which could cause the edge of the second insulator to warp.

In an embodiment of the secondary battery of the present disclosure, along the radius direction of the end wall, the distance between the inner surface of the second overlapping part and the outer periphery of the first lateral surface is b, and the distance between the outer periphery of the second insulator and the inner wall of the housing is c, where b<c.

In the above technical solution, the outer periphery of the first lateral surface may serve to limit the movement of the second insulator along the radius direction of the end wall. Through the setting of b<c, it may be achieved that one side of the outer periphery of the second insulator is restricted from contacting the inner wall of the housing, avoiding the situation where the opposite side of the second insulator fails to isolate the electrode assembly from the end wall, thus achieving a better insulation effect.

In an embodiment of the secondary battery of the present disclosure, the thickness of the first thinned area is i, the depth of the first step is k, where the ratio of i to i+k is: 0.2≤i/(i+k)≤0.8.

In the above technical solution, the first thinned area with this thickness possesses relatively high strength, facilitates molding, and may simultaneously reduce the space occupied in the height direction of the secondary battery.

In an embodiment of the secondary battery of the present disclosure, the thinning structure includes a second thinned area set at the inner periphery of the second insulator. The second overlapping part is located in the second thinned area. A second step that is indented in the direction of the end wall is disposed at the inner periphery of one side of the second insulator facing the electrode assembly, thus forming the second thinned area.

In the above technical solution, by setting the second thinned area at the inner periphery of the second insulator, on one hand, it is possible to improve the flatness of the connection part, and on the other hand, it is possible to achieve a reduction in the space occupied by the connection part in the height direction of the secondary battery. Additionally, the second step of the second insulator may be set opposite to the first step of the first insulator, where the first lateral surface of the first step and the second lateral surface of the second step may serve to limit each other, which may improve the centering of the first insulator and the second insulator during assembly. On the other hand, it is possible to make one side of the second insulator closer to the end wall have better flatness, further reducing the space occupied by the insulating member in the height direction of the secondary battery.

In an embodiment of the secondary battery of the present disclosure, the second insulator further includes a transition part that surrounds and connects the second thinned area. A third step that is indented in the direction close to the end wall is disposed on one side of the second insulator away from the end wall, thus forming the transition part. The average thickness of the transition part is greater than the average thickness of the second thinned area.

In the above technical solution, the setting of the transition part may solve the problem of adhesive shortage due to sudden changes in wall thickness of the second insulator in the radius direction, and may also alleviate the stress concentration problem of the second step.

In an embodiment of the secondary battery of the present disclosure, a third thinned area is disposed at the outer periphery of the second insulator, and a fourth step that is indented in the direction away from the end wall is disposed on one side of the second insulator facing the end wall, thus forming the third thinned area.

In the above technical solution, since the outer periphery of the second insulator is relatively close to the end wall and sidewall, especially where a round corner is normally set at the connection between the end wall and sidewall, the outer periphery of the second insulator might easily interfere with the end wall, sidewall, and round corner. Therefore, setting the fourth step on one side of the second insulator facing the end wall may improve the interference situation between the second insulator and the end wall, sidewall, and round corner.

In an embodiment of the secondary battery of the present disclosure, the second insulator may further include multiple fourth thinned areas. The multiple fourth thinned areas include first recesses disposed on at least one side in the thickness direction of the second insulator. The multiple fourth thinned areas are distributed in a radial manner at intervals in an area between the third thinned area and the transition part. A first protrusion is formed between every two of the adjacent first recesses.

In the above technical solution, the setting of the fourth thinned areas may serve the effect of reducing the weight of the second insulator, while the radially formed first protrusions may serve the effect of enhancing the strength of the second insulator.

In an embodiment of the secondary battery of the present disclosure, the fourth thinned areas include first recesses disposed on one side of the second insulator close to the end wall. At least one second protrusion is formed between at least one of the fourth thinned areas and the third thinned area along the radius direction of the second insulator.

In the above technical solution, setting the first recesses only on one side close to the end wall may, on one hand, reduce the processing difficulty, and on the other hand, serve the effect of balancing the weight of the second insulator. Additionally, the circumferential arrangement of the second protrusion may serve the effect of enhancing the strength of the second insulator.

In an embodiment of the secondary battery of the present disclosure, the number of the at least one second protrusion is multiple. The multiple second protrusions are disposed surrounding the third thinned area, with second recesses formed between every two of the adjacent second protrusions.

In the above technical solution, the setting of the second recess serves the function of facilitating the discharge of residual electrolyte in the first recesses.

In an embodiment of the secondary battery of the present disclosure, the number of fourth thinned areas is greater than or equal to four.

In the above technical solution, the number of fourth thinned areas corresponds to the formed first protrusions. When the number of fourth thinned areas is greater than or equal to four, the number of first protrusions is also greater than or equal to four. This arrangement may further serve the effect of better enhancing the strength of the second insulator.

In an embodiment of the secondary battery of the present disclosure, the distance between the outer periphery of the second insulator and the inner wall of the housing along the radius direction of the end wall is c, and the length of the first overlapping part is d, where d>c.

In the above technical solution, the distance between the outer periphery of the second insulator and the inner wall of the housing may cause the second insulator to be eccentric relative to the first insulator. The arrangement of d>c may improve the problem of misalignment between the second overlapping part and the first overlapping part due to the eccentricity of the second insulator relative to the first insulator. Meanwhile, it is possible to enhance the insulation effect of the insulating member between the electrode assembly and the end wall.

In an embodiment of the secondary battery of the present disclosure, the first insulator includes a first part disposed within the pole hole and a second part disposed between the inner flange and the end wall. The projection of the inner flange and the projection of the second part on the end wall at least partially overlap each other along the thickness direction of the end wall.

In the above technical solution, the arrangement of the first part may, on one hand, achieve insulation between the pole and the end wall. On the other hand, when the inner flange is pressed on the second part, the inner flange may be riveted more tightly, which is conducive to improving the riveting strength. Additionally, the arrangement of the first part may reduce the problem of outward expansion of the first insulator when the first insulator is riveted by the pole, thereby reducing the probability of a gap occurring between the pole and the end wall.

In an embodiment of the secondary battery of the present disclosure, the heat resistance of the first insulator is 240°C to 350°C, and the heat resistance of the second insulator is 100°C to 200°C.

In the above technical solution, setting the heat resistance of the first insulator near the pole to 240°C to 350°C, and the heat resistance of the second insulator away from the pole to 100°C to 200°C, the heat resistance of the first insulator is higher than that of the second insulator. Given that the heat generated near the pole is relatively high, this arrangement may improve the heat resistance performance of the insulating member, thereby enhancing the service life thereof. Additionally, materials with high heat resistance are less likely to shrink at high temperatures, reducing the rebound of the first insulator and ensuring the airtightness between the pole and the end wall. Moreover, the insulating member does not melt at high temperatures, reducing the risk of thermal runaway. Generally, materials with lower heat resistance are less costly than those with higher heat resistance. Choosing a more economical material for the second insulator may achieve the effect of reducing costs.

In an embodiment of the secondary battery of the present disclosure, the material of the first insulator is any one of soluble polytetrafluoroethylene, polybutylene terephthalate, and liquid crystal polymer, and the material of the second insulator is any one of polypropylene, polyphenylene sulfide, and polycarbonate.

In the above technical solution, the materials selected for the first insulator possess higher heat resistance performance, while the materials chosen for the second insulator have more economical costs. By selecting different materials according to the varying heat resistance requirements for different positions of the insulating member, the flexibility of the design may be improved. Simultaneously, this may enhance the performance of the insulating member and reduce the production costs thereof.

In an embodiment of the secondary battery of the present disclosure, the secondary battery is a cylindrical battery.

In the above technical solution, the cylindrical battery may possess advantages such as high energy density, long cycle life, and good safety performance.

In an embodiment of the secondary battery of the present disclosure, the cylindrical battery includes a housing, with one end of the housing open and the other end closed, and a pole hole is disposed at the closed end of the housing.

In the above technical solution, the cylindrical battery with this structure may possess advantages such as good manufacturing process performance and stable reliability.

In an embodiment of the secondary battery of the present disclosure, the housing is a steel housing.

In the above technical solution, the steel housing may possess excellent properties such as wear resistance, corrosion resistance, dust-proofing, and water-proofing, which may provide good protective performance.

The present disclosure further provides a battery assembly, which includes the secondary battery described in any of the above-mentioned embodiments.

The present disclosure further provides an electronic device, which includes the above-mentioned battery assembly.

The secondary battery of the present disclosure, by designing the insulating member to include a first insulator and a second insulator that are separated from each other, may achieve the ability to design the structures of the first insulator and the second insulator separately according to requirements. This may also facilitate the selection of different structures or materials based on different requirements in terms of structural requirement, insulation requirement, and heat resistance requirements, thus reducing the difficulty of design and component molding, and improving design flexibility.

### BRIEF DESCRIPTION OF THE DRAWINGS

To more clearly illustrate the technical solutions in the embodiments of the present disclosure or in the related art, a brief introduction of the drawings required in the description of the embodiments or the related art will be given below. Clearly, the drawings described below are only some embodiments of the present disclosure. For those skilled in the art, other embodiments may be obtained based on these drawings without creative effort.
FIG. 1 is a structural schematic view of an example of a secondary battery of the present disclosure.
FIG. 2 is a structural schematic view of an electrode assembly in an example of the secondary battery of the present disclosure.
FIG. 3 is a partial exploded view of a pole end in an example of the secondary battery of the present disclosure.
FIG. 4 is a structural schematic view of the first insulator in an example of the secondary battery of the present disclosure.
FIG. 5 is a structural schematic view of the second insulator in an example of the secondary battery of the present disclosure.
FIG. 6 is another perspective structural schematic view of the second insulator in an example of the secondary battery of the present disclosure.
FIG. 7 is an enlarged partial view of area A in FIG. 1.
FIG. 8 is an enlarged partial view of area B in FIG. 7.
FIG. 9 is an enlarged partial view of area B in FIG. 7 with the electrode assembly removed.
FIG. 10 is an enlarged partial view of area C in FIG. 7.
FIG. 11 is an enlarged partial view of area C in FIG. 7 with the electrode assembly removed.
FIG. 12 is a cross-sectional view of the first insulator in an example of the secondary battery of the present disclosure.
FIG. 13 is a half cross-sectional view of the second insulator in an example of the secondary battery of the present disclosure.
FIG. 14 is a schematic view of an example of a battery assembly of the present disclosure.
FIG. 15 is a schematic view of an example of the electronic device of the present disclosure.

### DESCRIPTION OF EMBODIMENTS

The following describes the implementation of the present disclosure through specific examples. Those skilled in the art may easily understand other advantages and effects of the present disclosure from the content disclosed in this specification. The present disclosure may also be implemented or applied through other different specific implementations, and various details in this specification may also be modified or changed based on different perspectives and applications without departing from the spirit of the present disclosure. It should be noted that, in the absence of conflict, the features in the following examples and embodiments may be combined with each other. It should also be understood that the terms used in the embodiments of the present disclosure are for describing specific embodiments and are not intended to limit the scope to be protected by the present disclosure. For test methods in the following examples where specific conditions are not specified, they are generally carried out under conventional conditions or according to the conditions suggested by various manufacturers.

When an embodiment gives a range of values, it should be understood that, unless otherwise stated in the present disclosure, either endpoint of each range of values as well as any value between the two endpoints may be selected. Unless otherwise defined, all technical and scientific terms used in the present disclosure are consistent with the understanding of those skilled in the art in the field of the present technology and the description of the present disclosure. The present disclosure may also be implemented using any methods, devices, and materials in the existing technology that are similar or equivalent to the methods, devices, and materials described in the embodiments of the present disclosure.

It should be noted that terms such as "upper", "lower", "left", "right", "middle" and "one" cited in this specification are merely for clarity of description and not intended to limit the scope of implementation of the present disclosure. Changes or adjustments in their relative relationships, without substantially changing the technical content, may also be considered within the scope of implementation of the present disclosure.

In this application, the secondary battery includes an electrode assembly. The electrode assembly is a component in the secondary battery where electrochemical reactions occur, and may include one or more electrode assemblies.

The secondary battery further includes a housing, a cover plate and a pole. The housing includes an end wall and a sidewall surrounding the end wall. One end of the sidewall has an opening. The electrode assembly may be assembled into the housing through the opening of the housing. The cover plate is configured to cover the opening of the housing to achieve sealing. The pole passes through the end wall and is electrically connected to the electrode assembly to lead out the electrical energy generated by the electrode assembly.

To reduce the risk of short circuits, it is necessary to insulate and isolate the pole from the end wall, as well as isolate the electrode assembly from the end wall. This is typically achieved by inserting an insulating member between the pole and the end wall. The insulator is at least partially located between the pole and the end wall to insulate the pole from the end wall, and extends in the radius direction along the end wall towards the sidewall to insulate the electrode assembly from the end wall.

In related technology, the insulating member is an integral structural component. However, the insulation requirements between the end wall and the electrode assembly differ from those between the end wall and the pole, resulting in disparate performance demands on the insulating member. The unitary design presents significant challenges and limited flexibility in terms of structural design and material selection to meet these distinct requirements.

Given that being said, the present disclosure provides a technical solution in which the insulating member is designed as the first insulator and the second insulator which are discrete to achieve individual structural design of the first insulator and the second insulator according to requirements. Such design also facilitates the selection of different structures or materials based on different requirements in terms of structural requirement, insulation requirement, and heat resistance requirement. In this way, it is possible to reduce the difficulty in design and component molding, and improves the flexibility of the design.

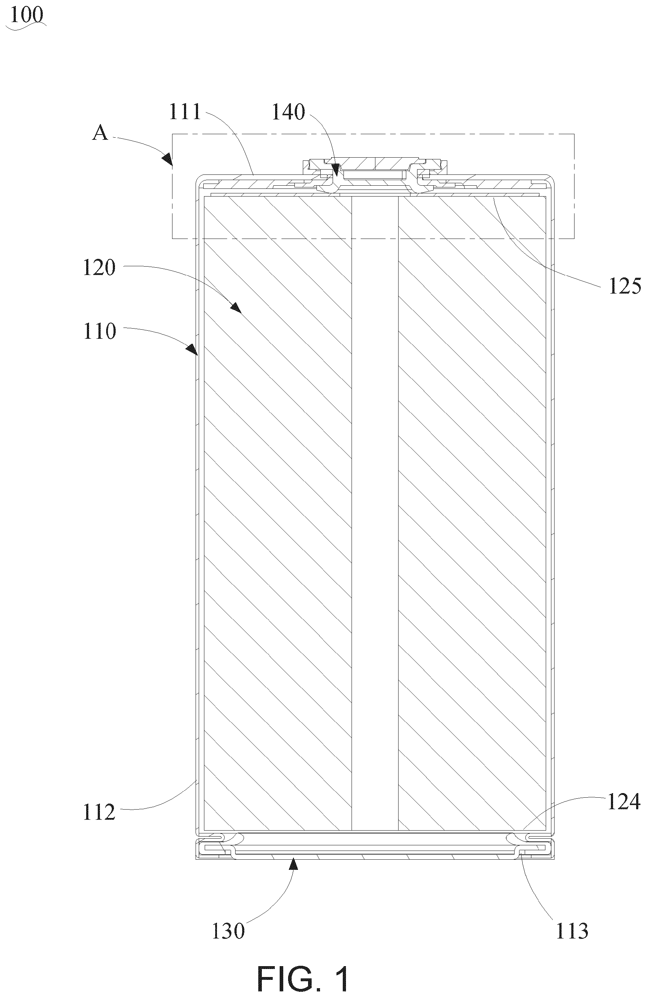

Please refer to FIG. 1 to FIG. 15, the present disclosure provides a secondary battery 100, a battery assembly 10 and an electronic device 1. The secondary battery 100 includes a housing 110, an electrode assembly 120, a pole 140, an insulating member 150 and a cover plate 130.

Please refer to FIG. 1, which is a structural schematic view of an example of the secondary battery of the present disclosure. The housing 110 includes an end wall 111 and a sidewall 112 surrounding the end wall 111. As long as a stable sealing and electrical connection relationship can be established, the connection between the end wall 111 and the sidewall 112 may be achieved through various methods, such as integral stamping, integral casting, or separate welding. The surrounding arrangement of the sidewall 112 is not limited and may be in the form of a circular column or a prismatic column, or may surround along any other closed-loop contour that can match the end wall 111. In this embodiment, the outer periphery of the end wall 111 is circular, and the sidewall 112 surrounds the outer periphery of the end wall 111 in a columnar shape, forming a circular opening 113 at one end of the sidewall 112 away from the end wall 111. The housing 110 formed by the end wall 111 and the sidewall 112 creates an accommodating cavity for containing the electrode assembly 120, electrolyte, and other necessary battery components. Specifically, the diameter of the housing 110 may be determined according to the specific dimensions of the electrode assembly 120, such as 18mm, 21mm, 46mm, etc. The material of the housing 110 may be various, such as copper, iron, aluminum, steel, aluminum alloy, etc. To prevent rusting of the housing 110 during long-term use, a layer of rust-proof material such as metallic nickel may also be plated on the surface of the housing 110.

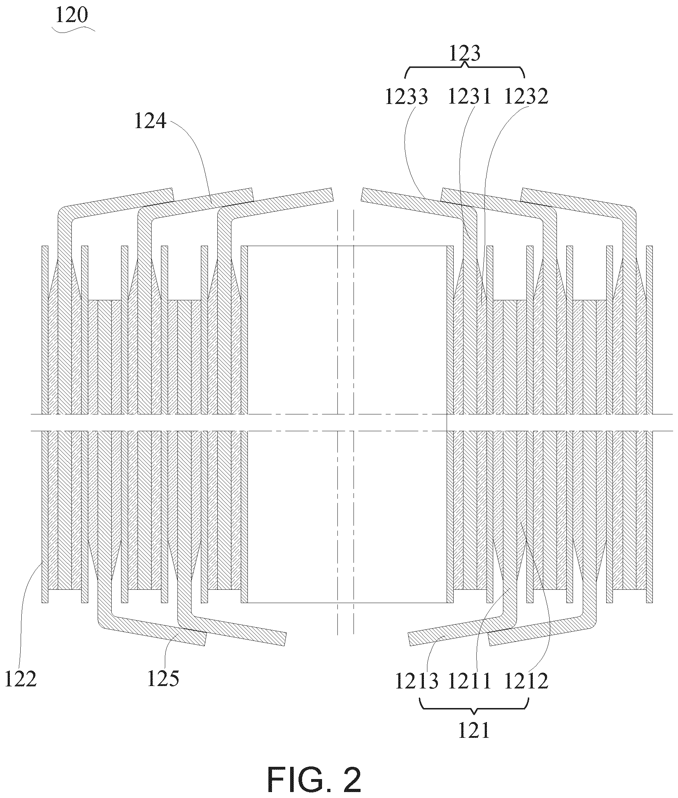

Please refer to FIG. 1 and FIG. 2, where FIG. 2 is a structural schematic view of the electrode assembly in an example of the secondary battery of the present disclosure. The electrode assembly 120 is disposed inside the housing 110, and the electrode assembly 120 is the component where electrochemical reactions occur in the secondary battery 100. The housing 110 may contain one or more electrode assemblies 120. The electrode assembly 120 includes electrode sheets and a separator 122, which are wound to form a wound structure. Specifically, in this embodiment, the electrode assembly 120 includes a positive electrode sheet 121, a separator 122, and a negative electrode sheet 123 wound around the axial direction of the housing 110.

The positive electrode sheet 121 includes a positive electrode current collector 1211 and a positive electrode active substance layer coated on the positive electrode current collector 1211. A first coated area 1212 coated with the positive electrode active substance layer and a first uncoated area 1213 without the positive electrode active substance layer are formed on the positive electrode current collector 1211. The first coated area 1212 and the first uncoated area 1213 are arranged along the axial direction of the housing 110. The first uncoated area 1213 extends beyond the separator 122 towards one end in the height direction of the secondary battery 100, and bends towards the axis of the housing 110 to form a stacked positive electrode tab 125.

The negative electrode sheet 123 includes a negative electrode current collector 1231 and a negative electrode active substance layer coated on the negative electrode current collector 1231. A second coated area 1232 coated with the negative electrode active substance layer and a second uncoated area 1233 without the negative electrode active substance layer are formed on the negative electrode current collector 1231. The second coated area 1232 and the second uncoated area 1233 are arranged along the axial direction of the housing 110. The second uncoated area 1233 extends beyond the separator122 towards the other end in the height direction of the secondary battery 100, and bends towards the axis of the housing 110 to form a stacked negative electrode tab 124.

The separator 122 is disposed between the positive electrode sheet 121 and the negative electrode sheet 123 to isolate the positive electrode active substance layer from the negative electrode active substance layer. Taking the lithium-ion secondary battery 100 as an example, the material of the positive electrode current collector 1211 may be aluminum, and the positive electrode active substance layer includes positive electrode active substance, which may be lithium cobalt oxide, lithium iron phosphate, ternary lithium, or lithium manganese oxide, etc. The material of the negative electrode current collector 1231 may be copper, and the negative electrode active substance layer includes negative electrode active material, which may be carbon or silicon, etc. The base material of the separator 122 may be polypropylene (PP) or polyethylene (PE), etc. To provide protection and insulation for the battery cell, an insulating film may also be wrapped around the exterior of the battery cell. The insulating film may be synthesized from PP, PE, polyethylene terephthalate (PET), polyvinyl chloride (PVC), or other high molecular polymer materials.

Please refer to FIG. 1 and FIG. 2. Furthermore, in this disclosure, the positive electrode tab 125 faces the end wall 111 or faces the opening 113, while the negative electrode tab 124 faces the other end of the housing 110. In this embodiment, the positive electrode tab 125 faces the end wall 111 and is electrically connected to the pole 140, making the pole 140 positively charged. The negative electrode tab 124 faces the opening 113 and is electrically connected to the housing 110, thereby becoming negatively charged. However, in other embodiments, the negative electrode tab 124 is connected to the pole 140, and the positive electrode tab 125 is connected to the housing 110.

Please refer to FIG. 1. The cover plate 130 is disposed on the opening 113 in a sealing manner. The outer periphery shape of the cover plate 130 corresponds to the shape of the opening 113, and connects with the sidewall 112 to seal the opening 113. The configuration method of the cover plate 130 includes, but is not limited to, mechanical sealing or welding sealing. In this embodiment, the cover plate 130 is sealed on and blocks the opening 113 using a mechanical sealing method.

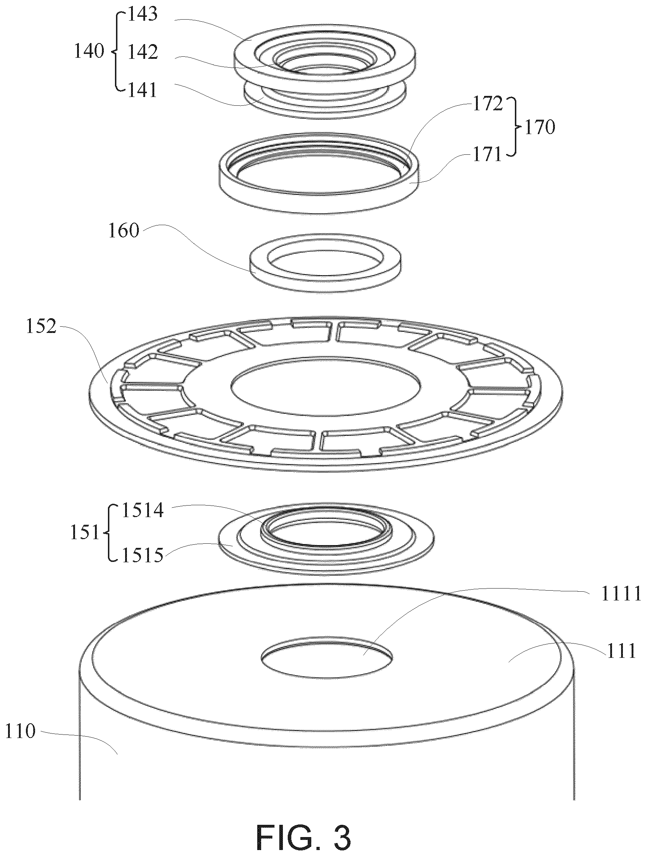

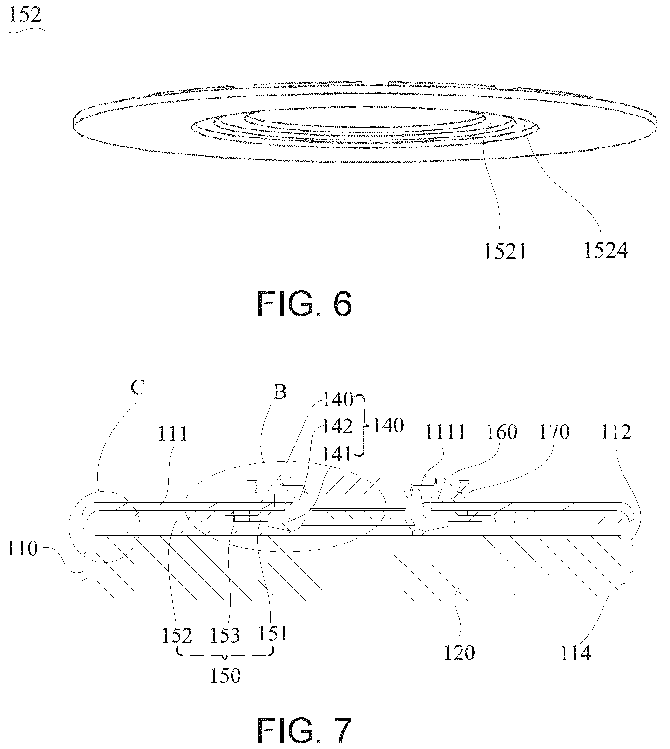

Please refer to FIG. 1 to FIG. 3 and FIG. 7. FIG. 3 is a partial exploded view of the pole end in an example of the secondary battery of the present disclosure, and FIG. 7 is an enlarged partial view of area A in FIG. 1. The end wall 111 is provided with a pole hole 1111. The pole 140 passes through the pole hole 1111 and insulated from the end wall 111. One end of the pole 140 facing the electrode assembly 120 passes through the end wall 111 and is directly electrically connected to the positive electrode tab 125 or indirectly connected through an adapter. The structural form of the pole 140 may be any suitable form that can pass through the end wall 111 and electrically connect with the positive electrode tab 125 of the electrode assembly 120. For example, the cross-section may be circular, square, prismatic, or an irregular contour that can achieve stable conduction. The shape of the pole hole 1111 corresponds to that of the pole 140. In this embodiment, the cross-section of the pole 140 is circular.

Please refer to FIG. 3 and FIG. 7. The pole 140 includes a columnar part 142, an inner flange 141, and an external flange 143, with the columnar part passing through the pole hole 1111. The cross-section of the columnar part 142 may be circular, square, prismatic, or other irregular contours that can achieve stable conduction. In consideration of better sealing and fitting effects, preferably, the columnar part 142 matches the pole hole 1111, meaning the shape of the pole hole 1111 corresponds to that of the columnar part 142. In this embodiment, the cross-section of the columnar part 142 is circular. The circular design facilitates processing, assembly, and sealing.

Please refer to FIG. 3 and FIG. 7. The inner flange 141 is located inside the housing 110 and extends from the columnar part 142 towards the periphery of the end wall 111. Specifically, the inner flange 141 is connected to one end of the columnar part 142 inside the housing 110 and extends towards the outer periphery of the end wall 111 along one side of the end wall 111 facing the interior of the housing 110. The cross-section shape of the inner flange 141 may be circular, square, prismatic, or other irregular contours that can achieve stable conduction; this is not limited in the present disclosure. The external flange 143 is connected to one end of the columnar part 142 outside the housing 110 and extends towards the outer periphery of the end wall 111 along one side of the end wall 111 facing the exterior of the housing 110. The cross-section shape of the external flange 143 may be circular, square, prismatic, or other irregular contours that can achieve stable conduction; this is not limited in the present disclosure.

It should be noted that the pole 140 and the end wall 111 are fixed by the inner flange 141 and the external flange 143. In this embodiment, the pole 140 is fixed through a riveting method. Specifically, the inner flange 141 may be the riveting part, the external flange 143 may also be the riveting part, or both the inner flange 141 and the external flange 143 may be riveted simultaneously. In this embodiment, the inner flange 141 is the riveting part. Since the inner flange 141 as the riveting part is formed by later riveting, its shape is uncontrollable due to external influences, resulting in an irregular cross-section shape. The external flange 143, being processed earlier, has a regular and controllable shape. In this embodiment, the cross-section shape of the external flange 143 is also circular. Therefore, the arrangement of the pole 140 in this embodiment is both aesthetically pleasing and beneficial for the safety of electrical connection with external power devices. The pole 140 is made of conductive metal material, which may be copper, nickel, or aluminum, etc. In this embodiment, the material of the pole 140 is aluminum, which is chosen for its ease of riveting process.

To avoid short circuits between the end wall 111 and the electrode tabs of the electrode assembly 120 near one side of the end wall 111, as well as between the end wall 111 and the pole 140, insulation design is necessary between the electrode assembly 120 and the end wall 111, and between the pole 140 and the end wall 111. Please refer to FIG. 7. The insulating member 150 is at least partially located on one side of the end wall 111 facing the interior of the housing 110 and isolates the electrode assembly 120 from the end wall 111. The shape and size of the insulating member 150 are not limited. The cross-section shape of the insulating member 150 may be circular, square, polygonal, or other irregular shapes, as long as it can prevent electrical connection between the end wall 111 and the electrode assembly 120, as well as between the inner flange 141 and the end wall 111.

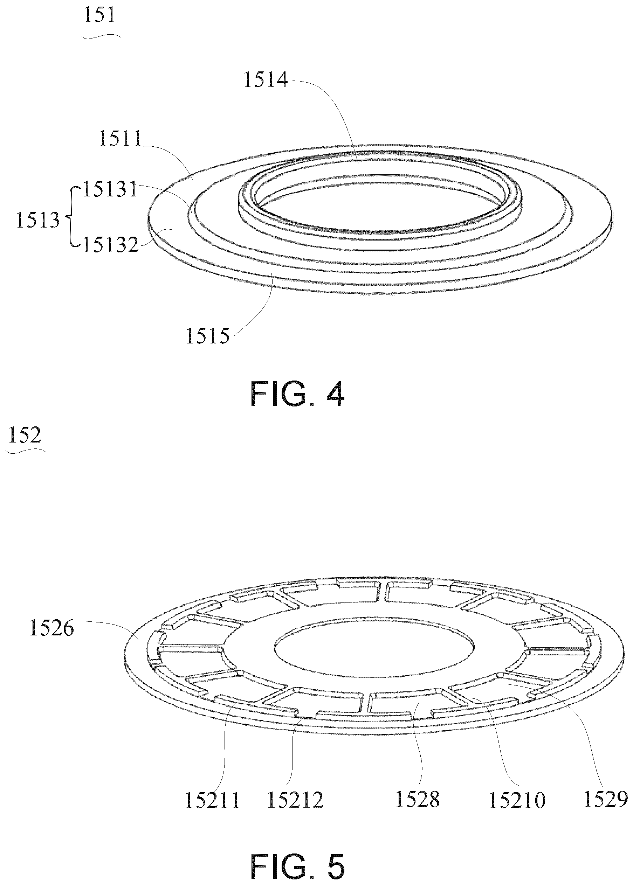

Considering that the insulation requirements between the end wall 111 and the electrode assembly 120, and between the end wall 111 and the pole 140 have different performance demands for the insulating member 150, it is difficult and less flexible to achieve structural design and material selection according to different needs with an integrated design of the insulating member 150. Please refer to FIG. 3 to FIG. 7. FIG. 4 is a structural view of the first insulator in an example of the secondary battery of the present disclosure. FIG. 5 is a structural view of the second insulator in an example of the secondary battery of the present disclosure. FIG. 6 is another structural view of the second insulator in an example of the secondary battery of the present disclosure from another perspective. In this embodiment, the insulating member 150 includes a first insulator 151 and a second insulator 152 separated from each other. The first insulator 151 surrounds the columnar part 142, meaning that the columnar part 142 is located on the inner side of the first insulator 151. The shape and size of the first insulator 151 are not limited. For example, the shape of the first insulator 151 may be circular, polygonal, or other shapes. In this embodiment, the shape of the first insulator 151 corresponds to the shape of the columnar part 142, forming a ring-shaped structure surrounding the columnar part 142. Furthermore, at least part of the first insulator 151 is clamped between the inner flange 141 and the end wall 111; this sentence can be understood as at least part of the first insulator 151 is located between the inner flange 141 and the end wall 111 to achieve insulation between the inner flange 141 and the end wall 111, and of course, there may be parts not located between the inner flange 141 and the end wall 111.

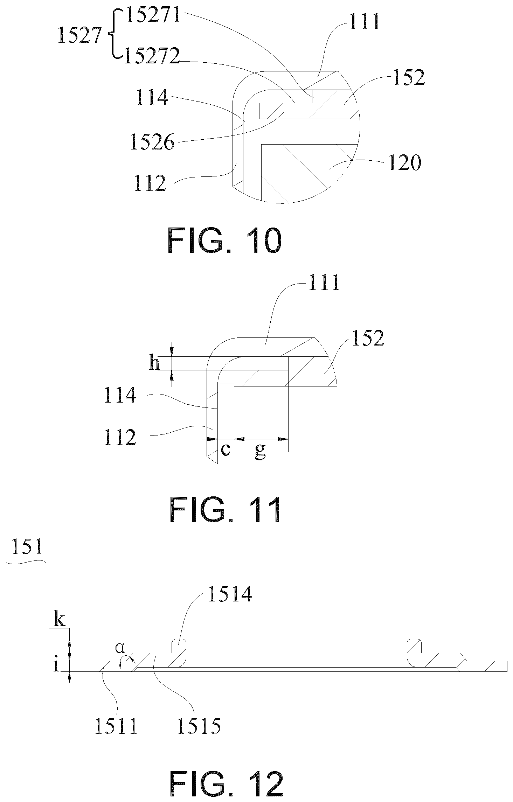

For example, in an embodiment, please refer to FIG. 3 to FIG. 4 and FIG. 12. FIG. 12 is a cross-sectional view of the first insulator in an example of the secondary battery of the present disclosure. The first insulator 151 includes a first part 1514 disposed in the pole hole 1111 and a second part 1515 disposed between the inner flange 141 and the end wall 111. The first part 1514 and the second part 1515 are connected at a specific angle, the value of which is not limited. The angle between the first part 1514 and the second part 1515 may be 80°, 85°, 90°, 95°, 100°, etc. In this embodiment, the angle between the first part 1514 and the second part 1515 is 90°. The 90° angle may improve the problem of the second part 1515 warping and reduce the space occupied in the height direction of the secondary battery 100. The shape and size of the first part 1514 are not limited. For example, the shape of the first part 1514 may be a columnar tube, a prismatic tube, or other irregularly shaped tubes, as long as it can achieve the effect of insulating the end wall 111 and the pole 140. Preferably, the shape of the first part 1514 matches the shape of the columnar part 142 to obtain better sealing and insulation effects. The shape of the second part 1515 is not limited. For example, the shape of the second part 1515 may be circular, polygonal, or other shapes. In this embodiment, the shape of the second part 1515 corresponds to the shape of the first part 1514, forming a ring-shaped structure surrounding the first part 1514. The projection of the inner flange 141 and the projection of the second part 1515 on the end wall 111 at least partially overlap each other along the thickness direction of the end wall 111; that is, the inner flange 141 may partially press against the second part 1515, for example, in the condition where the projection of the inner flange 141 is smaller than that of the second part 1515, or in the condition where the inner flange 141 is petal-shaped or other discontinuous shapes. Additionally, the inner flange 141 may fully press against the second part 1515, in which case the projection of the inner flange 141 and the projection of the second part 1515 are the same, or the projection of the inner flange 141 covers the projection of the second part 1515. In this embodiment, the setting of the first part 1514 can achieve insulation between the pole 140 and the end wall 111 on one hand, and on the other hand, when the inner flange 141 presses on the second part 1515, the inner flange 141 can be riveted more tightly, which is beneficial for improving the riveting strength. Moreover, the setting of the first part 1514 may reduce the problem of the first insulator 151 expanding outward when riveted by the pole 140, thereby reducing the probability of gaps occurring between the pole 140 and the end wall 111.

Please refer to FIG. 3 to FIG. 7. At least part of the second insulator 152 is disposed surrounding the outer periphery of the first insulator 151 to achieve the extension in radius direction of the insulating member 150 along the end wall 111, thereby improving the insulation effect between the end wall 111 and the electrode assembly 120. The shape of the second insulator 152 is not limited and may be a ring, a polygonal ring, or other irregular ring shapes. Preferably, the inner ring of the second insulator 152 matches the outer shape of the first insulator 151, and the outer ring of the second insulator 152 matches the inner wall 114 of the housing 110. In this embodiment, the second insulator 152 is ring-shaped. The second insulator 152 may be completely set surrounding the outer periphery of the first insulator 151, meaning there is no connection between the second insulator 152 and the first insulator 151. As long as the second insulator 152 surrounds the outside of the first insulator 151, it is possible to achieve the effect of improving the insulation performance between the end wall 111 and the electrode assembly 120. Preferably, part of the second insulator 152 surrounds the first insulator 151, meaning there is partial overlap between the second insulator 152 and the first insulator 151, leaving no gap between the second insulator 152 and the first insulator 151, thereby reducing the risk of short circuit between the electrode assembly 120 and the end wall 111 at the gap between the first insulator 151 and the second insulator 152.

In the above technical solution, designing the insulating member 150 as the first insulator 151 and the second insulator 152 which are discrete may allow for individual design of the structures of the first insulator 151 and the second insulator 152 according to requirements. Such design also facilitates the selection of different structures or materials based on different requirements in terms of structural requirement, insulation requirement, and heat resistance requirement. In this way, it is possible to reduce the difficulty in design and component molding, and improves the flexibility of the design. Additionally, due to the smaller radius dimension of the first insulator 151, the amount of warping deformation is reduced. Moreover, setting the insulating member 150 as two separate components, namely the first insulator 151 and the second insulator 152, may reducing the effect of clamping force on one end of the insulating member 150 away from the pole 140, improving the technical problem of one end of the insulating member 150 away from the pole 140 warping towards one side of the electrode assembly 120.

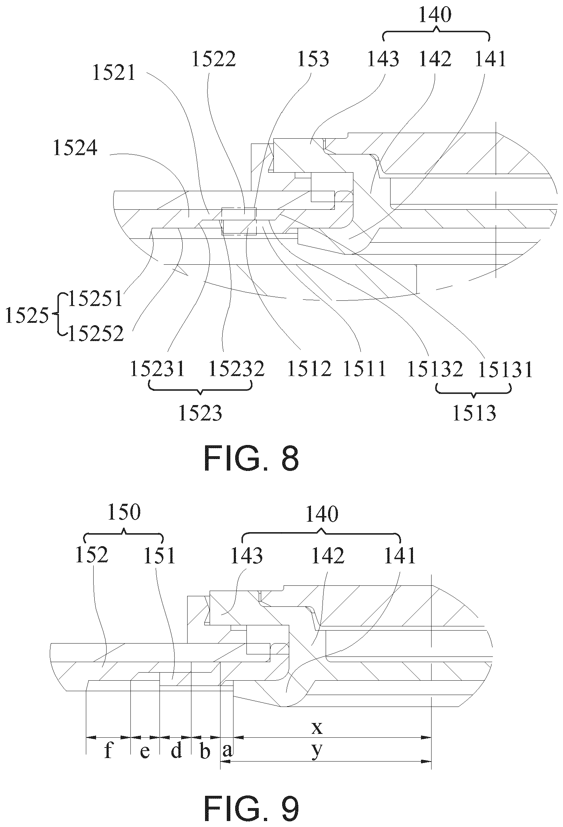

Please refer to FIG. 7 to FIG. 9, FIG. 8 is a partial enlarged view of area B in FIG. 7, and FIG. 9 is a partial enlarged view of area B in FIG. 7 with the electrode assembly removed. In an embodiment of the secondary battery 100 of the present disclosure, the projection of the first insulator 151 and the projection of the second insulator 152 on the end wall 111 at least partially overlap each other along the thickness direction of the end wall 111. The first insulator 151 includes a first overlapping part 1512 that overlaps with the second insulator 152, and the second insulator 152 includes a second overlapping part 1522 that overlaps with the first insulator 151. The area where the projection of the first insulator 151 and the projection of the second insulator 152 on the end wall 111 at least partially overlap each other is the overlapping portion of the first insulator 151 and the second insulator 152. This arrangement, on one hand, creates a connection between the two, improving installation stability, and on the other hand, reduces the risk of the electrode assembly 120 contacting the end wall 111 due to the gap in the radius direction between the first insulator 151 and the second insulator 152, enhancing the insulation performance of the first insulator 151 and the second insulator 152 between the end wall 111 and the electrode assembly 120. It should be noted that the shapes of the overlapping position of the first overlapping part 1512 and the second overlapping part 1522 are not limited, and the shapes may be continuous ring-shaped, polygonal ring-shaped, radial, toothed, or petal-shaped. There may be various overlapping forms between the first insulator 151 and the second insulator 152, which are not limited herein. For example, along the height direction of the end wall 111, the first overlapping part 1512 may be located between the end wall 111 and the second overlapping part 1522, or the second overlapping part 1522 may be located between the end wall 111 and the first overlapping part 1512, or the outer circle of the first insulator 151 and the inner circle of the second insulator 152 may be connected through an insertion method.

Please refer to FIG. 7 to FIG. 9, in an embodiment of the secondary battery 100 of the present disclosure, the second overlapping part 1522 is located between the first overlapping part 1512 and the end wall 111. This arrangement allows the second insulator 152 to be pressed against the end wall 111 by the first insulator 151 while the inner flange 141 presses the first insulator 151 towards the end wall 111, improving the installation stability of the second insulator 152, thereby enhancing safety performance.

Please refer to FIG. 7 to FIG. 9, in an embodiment of the secondary battery 100 of the present disclosure, the first overlapping part 1512 and the second overlapping part 1522 overlap to form a connection part 153 along the thickness direction of the end wall 111. The first insulator 151 and/or the second insulator 152 include a thinning structure for reducing the thickness of the connection part 153. The arrangement of the thinning structure may reduce the thickness of the connection part 153, which on one hand improves the flatness of the connection part 153, and on the other hand reduces the space occupied by the connection part 153 in the height direction of the secondary battery 100. It should be noted that this thinning structure may be arranged only on the first insulator 151, or only on the second insulator 152, or on both the first insulator 151 and the second insulator 152, which is not limited herein. Regardless of where the thinning structure is arranged, the thinning structure may achieve the effect of reducing the thickness of the connection part 153.

Please refer to FIG. 4, FIG. 7 to FIG. 9, and FIG. 12, in an embodiment of the secondary battery 100 of the present disclosure, the thinning structure includes a first thinned area 1511 arranged on the outer periphery of the first insulator 151, with the first overlapping part 1512 located in the first thinned area 1511. By arranging the first thinned area 1511 on the outer periphery of the first insulator 151, on one hand, it improves the flatness of the connection part 153, and on the other hand, the first overlapping part 1512 located in the first thinned area 1511 achieves a reduction in the space occupied by the connection part 153 in the height direction of the secondary battery 100 of the present disclosure. The form of the first thinned area 1511 may vary, which is not limited herein. For example, the first thinned area 1511 may include a thinned area on one side of the outer periphery of the first insulator 151 facing the end wall 111, or a thinned area on one side of the outer periphery of the first insulator 151 facing the electrode assembly 120, or a thinned area on both sides of the outer periphery of the first insulator 151.

Please refer to FIG. 4, FIG. 7 to FIG. 9, and FIG. 12, in an embodiment of the secondary battery 100 of the present disclosure, a first step 1513 indented in the direction away from the end wall 111 is arranged near the outer periphery on one side of the first insulator 151 facing the end wall 111, thus forming the first thinned area 1511. By arranging the first step 1513 on one side of the first insulator 151 facing the end wall 111 to form the thinned area, the side of the first insulator 151 facing the electrode assembly 120 remains flat, ensuring the flatness of the pressing surface of the inner flange 141, thereby improving the stability of the pressing action by the inner flange 141.

Please refer to FIG. 4, FIG. 7 to FIG. 9, and FIG. 12, in an embodiment of the secondary battery 100 of the present disclosure, the first step 1513 includes a first lateral surface 15131 surrounding the columnar part 142 and a first bottom wall 15132 connected to the bottom end of the first lateral surface 15131, with an angle α between the first lateral surface 15131 and the first bottom wall 15132, where 90°<α<180°. As shown in FIG. 12, as an example, the angle α may be 95°, 100°, 110°, 120°, 130°, 140°, 150°, 160°, 170°, 175°, etc. Setting the angle α within this range may alleviate stress concentration between the first bottom wall 15132 and the first lateral surface 15131, and facilitate demolding during molding process. The shape of the first bottom wall 15132 is not limited and may be a ring, a polygonal ring, or other irregularly shaped ring. In this embodiment, the first bottom wall 15132 is a ring, which has better processability and assembly characteristics.

Please refer to FIG. 7 to FIG. 9, in an embodiment of the secondary battery 100 of the present disclosure, along the radius direction of the end wall 111, the distance from the outer periphery of the inner flange 141 to the axis of the pole 140 is x, the distance from the edge of the first lateral surface 15131 away from the first bottom wall 15132 to the axis of the pole 140 is y, and the difference between x and y is a, where the absolute value of a ranges from 0 to 3mm. For example, the value of a may be -3mm, -2mm, -1mm, 0mm, 1mm, 2mm, 3mm, etc. Setting the absolute value of a within the range of 0mm to 3mm may achieve a closer radius distance between the second overlapping part 1522 and the inner flange 141, allowing the second overlapping part 1522 to receive greater pressing force from the inner flange 141, which is beneficial for improving the sealing performance of the insulating member 150. It should be noted that setting the absolute value of a within the range of 0mm to 3mm includes three scenarios: along the radius direction of the end wall 111, the outer periphery of the first lateral surface 15131 is located outside the outer periphery of the inner flange 141, the outer periphery of the first lateral surface 15131 is located inside the outer periphery of the inner flange 141, and the outer periphery of the first lateral surface 15131 is aligned with the outer periphery of the inner flange 141.

Please refer to FIG. 7 to FIG. 9, in an embodiment of the secondary battery 100 of the present disclosure, the distance between the inner surface of the second overlapping part 1522 and the outer periphery of the first lateral surface 15131 along the radius direction of the end wall 111 is b, where b ranges from 0.2mm to 3mm. As an example, the value of b may be 0.2mm, 0.5mm, 0.8mm, 1mm, 1.2mm, 1.5mm, 1.8mm, 2mm, 2.2mm, 2.5mm, 3mm, etc. When the pole 140 is riveted, the first insulator 151 will deform along the radius direction due to the force in the radius direction. Setting b within the range of 0.2mm to 3mm prevents the first insulator 151 from exerting excessive pressure on the second insulator 152 and causing the edge of the second insulator 152 to warp when the first insulator 151 is compressed and deformed along the radius direction.

Please refer to FIG. 7 to FIG. 11, where FIG. 10 is an enlarged partial view of area C in FIG. 7, and FIG. 11 is an enlarged partial view of area C in FIG. 7 with the electrode assembly removed. In an embodiment of the secondary battery 100 of the present disclosure, along the radius direction of the end wall 111, the distance between the inner surface of the second overlapping part 1522 and the outer periphery of the first lateral surface 15131 is b, and the distance between the outer periphery of the second insulator 152 and the inner wall 114 of the housing 110 is c, where b<c. The outer periphery of the first lateral surface 15131 may serve to limit the movement of the second insulator 152 along the radius direction of the end wall 111. By setting b<c, it is possible to restrict one side of the outer periphery of the second insulator 152 from contacting the inner wall 114 of the housing 110, avoiding the situation where the opposite side of the second insulator 152 cannot achieve the effect of isolating the electrode assembly 120 and the end wall 111, thus achieving a better insulation effect.

Please refer to FIG. 12, in an embodiment of the secondary battery 100 of the present disclosure, the thickness of the first thinned area 1511 is i, the depth of the first step 1513 is k, where the ratio of i to i+k is: 0.2≤i/(i+k)≤0.8, as shown in FIG. 12. The first thinned area 1511 with this thickness possesses relatively high strength, facilitates molding, and simultaneously reduces space occupied in the height direction of the secondary battery 100. In some embodiments, the preferred range of i may be 0.2mm to 2mm. As an example, the value of i may be 0.2mm, 0.5mm, 0.8mm, 1mm, 1.2mm, 1.5mm, 1.8mm, 2mm, etc.

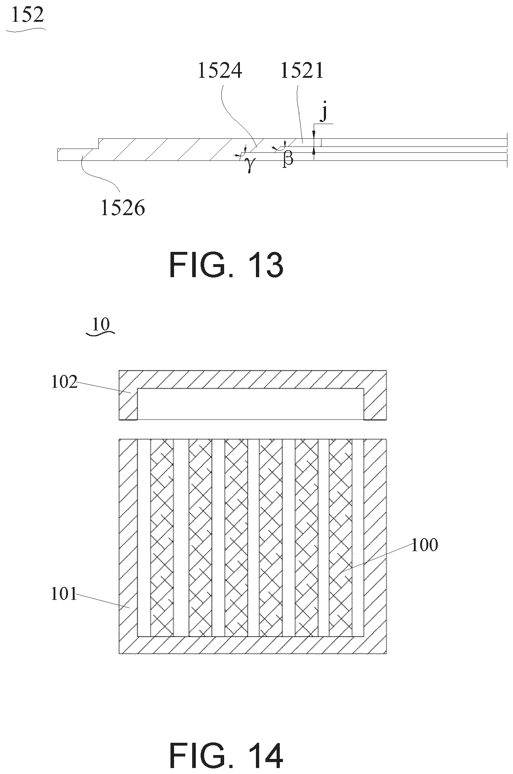

Please refer to FIG. 6 to FIG. 9 and FIG. 13, where FIG. 13 is a half-sectional view of the second insulator in an example of the secondary battery of the present disclosure. In an embodiment of the secondary battery 100 of the present disclosure, the thinning structure includes a second thinned area 1521 set at the inner periphery of the second insulator 152, with the second overlapping part 1522 located in the second thinned area 1521. By setting the second thinned area 1521 at the inner periphery of the second insulator 152, on one hand, it is possible to improve the flatness of the connection part 153, and on the other hand, it is possible to achieve a reduction in the space occupied by the connection part 153 in the height direction of the secondary battery 100. The form of the second thinned area 1521 may vary and is not limited, for example, it may include a thinned area on one side of the inner periphery of the second insulator 152 facing the end wall 111, or a thinned area on one side of the inner periphery of the second insulator 152 facing the electrode assembly 120, or a thinned area on both sides of the inner periphery of the second insulator 152.

Please refer to FIG. 6 to FIG. 9 and FIG. 13, in an embodiment of the secondary battery 100 of the present disclosure, a second step 1523 indented in the direction close to the end wall 111 is disposed near the outer periphery on one side of the second insulator 152 away from the end wall 111, thus forming the second thinned area 1521. This arrangement allows the second step 1523 of the second insulator 152 to be set opposite to the first step 1513 of the first insulator 151, where the first lateral surface 15131 of the first step 1513 and the second lateral surface 15231 of the second step 1523 may serve to limit each other, which may improve the centering of the first insulator 151 and the second insulator 152 during assembly. On the other hand, it is possible to ensure that one side of the second insulator 152 facing the end wall 111 has better flatness, further reducing the space occupied by the insulating member 150 in the height direction of the secondary battery 100.

Please refer to FIG. 7 to FIG. 8 and FIG. 13, in an embodiment of the secondary battery 100 of the present disclosure, the second step 1523 includes a second lateral surface 15231 surrounding the first overlapping part 1512 and a second bottom wall 15232 connected to the bottom end of the second lateral surface 15231, where the angle β between the second lateral surface 15231 and the second bottom wall 15232 is 90°<β<180°. As shown in FIG. 13, as an example, the angle β may be 95°, 100°, 110°, 120°, 130°, 140°, 150°, 160°, 170°, 175°, etc. Setting the angle β within this range may alleviate stress concentration between the second lateral surface 15231 and the second bottom wall 15232, and facilitate demolding during molding process. The shape of the second bottom wall 15232 is not limited herein and may be a ring, a polygonal ring, or other irregularly shaped ring. Preferably, the shape of the second bottom wall 15232 corresponds to that of the first bottom wall 15132. In this embodiment, the first bottom wall 15132 is a ring, so the second bottom wall 15232 is also a ring, as the ring has better processability and assembly characteristics.

Please refer to FIG. 7 to FIG. 9, in an embodiment of the secondary battery 100 of the present disclosure, the distance between the outer lateral surface of the first overlapping part 1512 and the outer periphery of the second lateral surface 15231 along the radius direction of the end wall 111 is e, where the range of e is 0.2mm to 3mm. The value of e may be 0.2mm, 0.5mm, 0.8mm, 1mm, 1.2mm, 1.5mm, 1.8mm, 2mm, 2.2mm, 2.5mm, 3mm, etc. In this technical solution, the gap between the outer lateral surface of the first overlapping part 1512 and the outer periphery of the second lateral surface 15231 is used as a positioning gap for the first insulator 151 and the second insulator 152 during the assembly process. During assembly, the positioning fixture cooperates with this positioning gap. Setting the range of e to 0.2mm to 3mm may both meet the processing requirements of the positioning fixture and improve the problem of the second insulator 152 warping due to an excessively large gap.

Please refer to FIG. 6 to FIG. 9 and FIG. 13, in an embodiment of the secondary battery 100 of the present disclosure, the second insulator 152 also includes a transition part 1524 that surrounds and connects the second thinned area 1521. A third step 1525 indented in the direction close to the end wall 111 is disposed on one side of the second insulator 152 away from the end wall 111, thus forming the transition part 1524. The average thickness of the transition part 1524 is greater than the average thickness of the second thinned area 1521. In this technical solution, the setting of the transition part 1524 may solve the problem of adhesive shortage due to sudden changes in wall thickness of the second insulator 152 in the radius direction, and may also alleviate the stress concentration problem of the second step 1523.

Please refer to FIG. 6 to FIG. 8 and FIG. 13, in an embodiment of the secondary battery 100 of the present disclosure, the third step 1525 includes a third bottom wall 15252 that surrounds and connects the second thinned area 1521, and a third lateral surface 15251 that connects with the third bottom wall 15252. The angle between the third lateral surface 15251 and the third bottom wall 15252 is y, where 90°<γ<180°. As shown in FIG. 13, as an example, the angle y may be 95°, 100°, 110°, 120°, 130°, 140°, 150°, 160°, 170°, 175°, etc. Setting the angle y within this range may alleviate the stress concentration between the third lateral surface 15251 and the third bottom wall 15252, and facilitate demolding during molding process. The shape of the third bottom wall 15252 is not limited herein and may be a ring, a polygonal ring, or other irregularly shaped ring. In this example, the third bottom wall 15252 is a ring, which has better processability and assembly characteristics.

Please refer to FIG. 6 to FIG. 9, in an embodiment of the secondary battery 100 of the present disclosure, the distance from the outer periphery of the second lateral surface 15231 to the outer periphery of the third lateral surface 15251 along the radius direction of the end wall 111 is 0.2mm to 5mm. This distance is named f. As an example, the value of f may be 0.2mm, 0.5mm, 0.8mm, 1mm, 1.2mm, 1.5mm, 1.8mm, 2mm, 2.2mm, 2.5mm, 3mm, 3.5mm, 4mm, 4.5mm, 5mm, etc. In this technical solution, the distance from the outer periphery of the second lateral surface 15231 to the outer periphery of the third lateral surface 15251 is the length of the transition part 1524 along the radius direction. When the length f of the transition part 1524 is within the range of 0.2mm to 5mm, it is possible to solve the problem of adhesive shortage due to sudden changes in wall thickness of the second insulator 152 in the radius direction, while ensuring the strength of the second insulator 152.

Please refer to FIG. 3, FIG. 5, FIG. 7, FIG. 10, FIG. 11 and FIG. 13, in an embodiment of the secondary battery 100 of the present disclosure, a third thinned area 1526 is disposed at the outer periphery of the second insulator 152, and a fourth step 1527 that is indented in a direction away from the end wall 111 is disposed on one side of the second insulator 152 facing the end wall 111, thus forming the third thinned area 1526. Since the outer periphery of the second insulator 152 is close to the end wall 111 and the sidewall 112, especially at the connection between the end wall 111 and the sidewall 112 where a round corner is normally set, the outer periphery of the second insulator 152 may easily interfere with the end wall 111, the sidewall 112 and the round corner. Therefore, setting the fourth step 1527 on one side of the second insulator 152 facing the end wall 111 may overcome the interference between the second insulator 152 and the end wall 111, the sidewall 112 and the round corner.

Please refer to FIG. 10 to FIG. 11, in an embodiment of the secondary battery 100 of the present disclosure, the fourth step 1527 includes a fourth lateral surface 15271 and a fourth bottom wall 15272 connected to the bottom end of the fourth lateral surface 15271. The length of the fourth bottom wall 15272 along the radius direction of the end wall 111 is defined as g, and the range of g is 0.2mm to 5mm. As an example, the value of g may be 0.2mm, 0.5mm, 0.8mm, 1mm, 1.2mm, 1.5mm, 1.8mm, 2mm, 2.2mm, 2.5mm, 3mm, 3.5mm, 4mm, 4.5mm, 5mm, etc. The fourth step 1527 with g in this dimension range allows the second insulator 152 to have a higher strength while overcoming the interference between the outer periphery of the second insulator 152 and the end wall 111, the sidewall 112 and the round corner. The shape of the fourth bottom wall 15272 is not limited herein and may be a ring, a polygonal ring, or other irregularly shaped ring. In this embodiment, the fourth bottom wall 15272 is a ring, which has better processing and assembly properties.

Please refer to FIG. 10 to FIG. 11, in an embodiment of the secondary battery 100 of the present disclosure, the height of the fourth lateral surface 15271 is 0.05mm to 2mm. The height of the fourth lateral surface 15271 is named h, as shown in the figure. As an example, the value of h may be 0.05mm, 0.1mm, 0.15mm, 0.2mm, 0.25mm, 0.5mm, 0.75mm, 1mm, 1.25mm, 1.5mm, 1.75mm, 2mm, etc. In the third thinned area 1526 within the specified dimensional range, while improving the interference between the outer periphery of the second insulator 152 and the end wall 111, the side wall 112, and round corner, it possesses the advantage of facilitating formation.

Please refer to FIG. 3 and FIG. 5, in an embodiment of the secondary battery 100 of the present disclosure, the second insulator 152 also includes multiple fourth thinned areas 1528. The number of fourth thinned areas 1528 is not limited herein and may be 4, 5, 6, 8, 9, 10 or 12, etc. The fourth thinned areas 1528 include first recesses 1529 disposed on at least one side in the thickness direction of the second insulator 152, that is, the first recesses 1529 may be disposed on one side of the second insulator 152 facing the end wall 111, or the first recesses 1529 may be disposed on one side of the second insulator 152 facing the electrode assembly 120. The first recesses 1529 may also be disposed on both sides of the second insulator 152. Multiple fourth thinned areas 1528 are radially distributed at intervals in an area between the third thinned area 1526 and the transition part 1524, with a first protrusion 15210 formed between every two of the adjacent first recesses 1529. The setting of the fourth thinned area 1528 may serve to reduce the weight of the second insulator 152, while the radially formed first protrusions 15210 may serve to enhance the strength of the second insulator 152.

Please refer to FIG. 3 and FIG. 5, in an embodiment of the secondary battery 100 of the present disclosure, the fourth thinned areas 1528 include first recesses 1529 disposed on one side of the second insulator 152 near the end wall 111. Setting the first recesses 1529 only on one side near the end wall 111 not only reduces the processing difficulty but also serves to balance the weight of the second insulator 152. At least one second protrusion 15211 is formed between the fourth thinned area 1528 and the third thinned area 1526 along the radius direction of the second insulator 152. The second protrusion 15211 may be in the form of a single integral surrounding the transition part 1524, or multiple second protrusions 15211 may be disposed at intervals and surround the transition part 1524. The number of second protrusions 15211 is not limited herein and may be 2, 4, 5, 6, 8, 9, 10, 12, etc. In this embodiment, the number of second protrusions 15211 is 12. The surrounding arrangement of the second protrusions 15211 may serve to enhance the strength of the second insulator 152.

Please refer to FIG. 3 and FIG. 5, in an embodiment of the secondary battery 100 of the present disclosure, there are multiple second protrusions 15211, and these multiple second protrusions 15211 are set surrounding the third thinned area 1526, with second recesses 15212 formed between every two of the adjacent second protrusions 15211. The setting of the second recess 15212 serves to facilitate the discharge of residual electrolyte in the first recesses 1529.

Please refer to FIG. 3 and FIG. 5, in an embodiment of the secondary battery 100 of the present disclosure, the number of fourth thinned areas 1528 is greater than or equal to four. The number of fourth thinned areas 1528 corresponds to the formed first protrusions 15210. When the number of fourth thinned areas 1528 is greater than or equal to four, the number of first protrusions 15210 is also greater than or equal to four. This arrangement may further serve to better enhance the strength of the second insulator 152. In this embodiment, 12 fourth thinned areas 1528 are set, correspondingly forming 12 first protrusions 15210. The set quantity may enable the second insulating member 150 to have a relatively light weight while possessing relatively high strength. At the same time, 12 second recesses 15212 are set, corresponding one-to-one with the 12 fourth thinned areas 1528. This arrangement facilitates the discharge of residual electrolyte in each of the first recesses 1529.

Please refer to FIG. 13, in an embodiment of the secondary battery 100 of the present disclosure, the thickness of the second thinned area 1521 is 0.2mm to 2mm. The thickness of the second thinned area 1521 is named j, as shown in FIG. 13. As an example, the value of j may be 0.2mm, 0.5mm, 0.8mm, 1mm, 1.2mm, 1.5mm, 1.8mm, 2mm, etc. The first thinned area 1511 with thickness j in this range possesses relatively high strength, facilitates molding, and at the same time may reduce the space occupied in the height direction of the secondary battery 100.

Please refer to FIG. 7 to FIG. 9, in an embodiment of the secondary battery 100 of the present disclosure, the length of the first overlapping part 1512 along the radius direction of the end wall 111is d, and the range of d is 0.05mm to 3mm. As an example, the value of d may be 0.05mm, 0.1mm, 0.15mm, 0.2mm, 0.25mm, 0.5mm, 0.75mm, 1mm, 1.25mm, 1.5mm, 1.75mm, 2mm, 2.2mm, 2.5mm, 3mm, etc. Setting the length d of the first overlapping part 1512 in the range of 0.05mm to 3mm may achieve a relatively stable overlap effect between the first insulator 151 and the second insulator 152.

Please refer to FIG. 7 to FIG. 9, in an embodiment of the secondary battery 100 of the present disclosure, the range of d is 0.5mm to 3mm. As an example, the value of d may be 0.5mm, 0.8mm, 1mm, 1.2mm, 1.5mm, 1.8mm, 2mm, 2.2mm, 2.5mm, 3mm, etc. Setting the length of the first overlapping part 1512 in the range of 0.5mm to 3mm may further improve the stability of the overlap between the first insulator 151 and the second insulator 152.

Please refer to FIG. 7 to FIG. 11, in an embodiment of the secondary battery 100 of the present disclosure, the distance between the outer periphery of the second insulator 152 and the inner wall 114 of the housing 110 along the radius direction of the end wall 111 is c, and the length of the first overlapping part 1512 is d, where d>c. Since the distance between the outer periphery of the second insulator 152 and the inner wall 114 of the housing 110 may cause the second insulator 152 to be eccentric relative to the first insulator 151, the arrangement of d>c may solve the problem of the second overlapping part 1522 and the first overlapping part 1512 failing to overlap due to the eccentricity of the second insulator 152 relative to the first insulator 151. At the same time, it is possible to improve the insulation effect of the insulating member 150 between the electrode assembly 120 and the end wall 111.

Please refer to FIG. 7 and FIG. 10 to FIG. 11, in an embodiment of the secondary battery 100 of the present disclosure, the distance between the outer periphery of the second insulator 152 and the inner wall 114 of the housing 110 along the radius direction of the end wall 111 is c, and the range of c is 0.05mm to 3mm. As an example, the value of c may be 0.05mm, 0.1mm, 0.15mm, 0.2mm, 0.25mm, 0.5mm, 0.75mm, 1mm, 1.25mm, 1.5mm, 1.75mm, 2mm, 2.2mm, 2.5mm, 3mm, etc. Leaving a gap between the outer periphery of the second insulator 152 and the inner wall 114 of the housing 110 is beneficial for reducing the assembly difficulty of the first insulator 151 and the second insulator 152, while also leaving space for the radius deformation of the first insulator 151 and the second insulator 152 during assembly. Setting c in the range of 0.05mm to 3mm makes the second insulator 152 both easy to install and have a good insulation effect.

In an embodiment of the secondary battery 100 of the present disclosure, the material of the first insulator 151 is different from that of the second insulator 152. Different materials are selected according to the different heat resistance requirements for different positions of the insulating member 150, which improves the flexibility of the design, enhances the performance of the insulating member 150, and also reduces the production cost of the insulating member 150.

Please refer to FIG. 7, in an embodiment of the secondary battery 100 of the present disclosure, the heat resistance of the first insulator 151 is 240°C to 350°C. For example, the heat resistance of the first insulator 151 may be 240°C, 250°C, 260°C, 270°C, 280°C, 290°C, 300°C, 310°C, 320°C, 330°C, 340°C, 350°C, etc. The heat resistance of the second insulator 152 is 100°C to 200°C. For example, the heat resistance of the second insulator 152 may be 100°C, 110°C, 120°C, 130°C, 140°C, 150°C, 160°C, 170°C, 180°C, 190°C, 200°C, etc. In this technical solution, the heat resistance of the first insulator 151 near the pole 140 is set to 240°C to 350°C, and the heat resistance of the second insulator 152 away from the pole 140 is 100°C to 200°C. Since the heat generated near the pole 140 is high, setting the heat resistance of the first insulator 151 near the pole 140 higher than that of the second insulator 152 may improve the heat resistance performance of the insulating member 150, thereby increasing its service life. Additionally, materials with high heat resistance are less likely to shrink at high temperatures, reducing the rebound of the first insulator 151 and ensuring the airtightness between the pole 140 and the end wall 111. Moreover, the insulating member does not melt at high temperatures, reducing the risk of thermal runaway. Furthermore, materials with lower heat resistance are usually less expensive than those with higher heat resistance. Choosing a more economical material for the second insulator 152 may achieve the effect of reducing costs.

It should be noted that the difference in heat resistance between the first insulator 151 and the second insulator 152 may be achieved by using different materials, or by coating a heat-resistant layer on the same material. The present disclosure is not limited thereto. The selection of materials for the first insulator 151 and the second insulator 152 is based on adaptive selection according to the requirements of heat resistance, pressure resistance, safety performance, fluidity, shrinkage, and cost needed for actual working conditions.

In an embodiment of the secondary battery 100 of the present disclosure, the material of the first insulator 151 may be any one of perfluoroalkoxy (PFA), polybutylene terephthalate (PBT), and liquid crystal polymer (LCP), while the material of the second insulator 152 may be any one of PP, polyphenylene sulfide (PPS), and polycarbonate (PC). The material selected for the first insulator 151 possesses higher heat resistance performance, while the material selected for the second insulator 152 has a more economical cost.

Please refer to FIG. 3. In an embodiment of the secondary battery 100 of the present disclosure, the secondary battery 100 also includes a sealing member 160 and an external flange insulating member 170. The sealing member 160 surrounding the columnar part 142 is clamped between the external flange 143 and the end wall 111. Specifically, the sealing member 160 surrounds the columnar part 142 and is pressed tightly between the external flange 143 and the end wall 111, used for sealing between the pole 140 and the end wall 111. The sealing member 160 is made of elastic material, which may be ethylene propylene rubber, fluorosilicone rubber, or fluorine rubber, but is not limited to these. The external flange insulating member 170 is located at the outer periphery of the external flange 143, and at least partially clamped between the external flange 143 and the end wall 111, used for insulation between the external flange 143 and the end wall 111. Preferably, the external flange insulating member 170 includes a third insulator 171 surrounding the outer periphery of the external flange 143 and a fourth insulator 172 located between the external flange 143 and the end wall 111. The third insulator 171 and the fourth insulator 172 are integrally molded. The material of the external flange insulating member 170 may be PP, PPS, PC, PFA, PBT, and LCP, etc. It should be noted that the compression rebound rate of the sealing member 160 is higher than that of the insulating member 150 and the external flange insulating member 170. The higher compression rebound rate allows the sealing member 160 to have a better sealing effect.

Please refer to FIG. 1. In an embodiment of the secondary battery 100 of the present disclosure, the secondary battery 100 is a cylindrical battery. The cylindrical battery possesses high energy density, long cycle life, and good safety performance.

Please refer to FIG. 1. In an embodiment of the secondary battery 100 of the present disclosure, the cylindrical battery includes a housing 110. The housing 110 has an opening 113 at one end and is closed at the other end. A pole hole 1111 is disposed at the closed end of the housing 110. This structure of the cylindrical battery has good manufacturing process performance and stable reliability.

Furthermore, in an embodiment of the secondary battery 100 of the present disclosure, the housing 110 is a steel housing. The steel housing possesses excellent properties such as wear resistance, corrosion resistance, dust-proof, and water-proof, which may provide good protection.

Please refer to FIG. 14. FIG. 14 is a schematic view of an example of the secondary battery of the present disclosure. The disclosure further provides a battery assembly 10. The battery assembly 10 includes the secondary battery 100 described in any one of the embodiments. In an embodiment of the secondary battery 10 of the present disclosure, the battery assembly 10 includes a box 101, a box cover 102, and multiple battery assemblies 100. The multiple battery assemblies 100 are placed in the box 101, connected in series or parallel, or a combination of series and parallel connections. The box cover 102 seals the box 101 to protect the multiple battery assemblies 100. It should be noted that in addition to the secondary battery 100 of the present disclosure, the battery assembly 10 may further include, for example, a thermal management system and a circuit board. The battery assembly 10 may be a battery module, a battery pack, or an energy storage cabinet, etc., which will not be elaborated on further here.

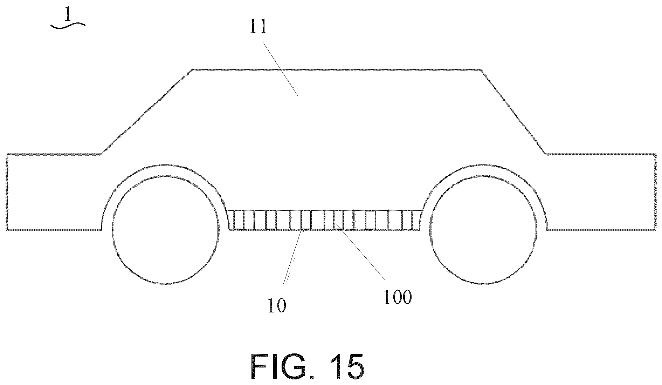

Please refer to FIG. 15. FIG. 15 is a schematic view of an example of the electronic device of the present disclosure. The disclosure also provides an electronic device 1. The electronic device 1 includes the aforementioned battery assembly 10. The operation part 11 is electrically connected to the battery assembly 10 to obtain power support. As an example, the electronic device 1 is a vehicle. The vehicle may be a gasoline vehicle, a gas vehicle, or a new energy vehicle. The new energy vehicle may be a pure electric vehicle, a hybrid vehicle, or a range-extended vehicle, but is not limited to these. The operation part 11 is the vehicle body. The battery assembly 10 is disposed at the bottom of the vehicle body and provides power support for the operation of the vehicle or the operation of electrical components inside the vehicle. However, in some other embodiments, the electronic device 1 may also be a mobile phone, a portable device, a laptop computer, a ship, a spacecraft, an electric toy, and an electric tool, etc. Spacecraft includes airplanes, rockets, space shuttles, and spaceships, etc. The operation part 11 may be a unit component that can obtain power from the battery assembly 10 and perform corresponding operation, such as the fan blade rotation unit of a fan, the dust suction operation unit of a vacuum cleaner, etc. Electric toys include stationary or mobile electric toys, for example, game consoles, electric car toys, electric ship toys, and electric airplane toys, etc. Electric tools include metal cutting electric tools, grinding electric tools, assembly electric tools, and railway electric tools, for example, electric drills, electric grinders, electric wrenches, electric screwdrivers, electric hammers, impact drills, concrete vibrators, and electric planers, etc. The embodiments of the present disclosure do not impose special restrictions on the above-mentioned electronic device 1.

The secondary battery of the present disclosure, by designing the insulating member to include a first insulator and a second insulator that are separated from each other, may achieve the ability to design the structures of the first insulator and the second insulator separately according to requirements. This may also facilitate the selection of different materials based on different insulation requirements, thus reducing the difficulty of design and improving design flexibility. In the meantime, the present disclosure allows for the selection of different materials according to requirements, which may improve product performance while achieving economic production costs. Therefore, the present disclosure effectively overcomes some practical problems in the existing technology, thus having high utilization value and practical significance.

## Claims

1. A secondary battery (100), comprising:
a housing (110), comprising an end wall (111) and a sidewall (112) surrounding the end wall (111), and the end wall (111) provided with a pole hole (1111);
an electrode assembly (120), disposed inside the housing (110);
a pole (140), fixed to the end wall (111) and electrically connected to the electrode assembly (120), wherein the pole (140) comprises a columnar part (142) and an inner flange (141), the columnar part (142) passes through the pole hole (1111), the inner flange (141) is located inside the housing (110) and extends from the columnar part (142) towards a periphery of the end wall (111);
an insulating member (150), at least partially located on one side of the end wall (111) facing an interior of the housing (110), wherein the secondary battery (100) is **characterized in that** the insulating member (150) comprises a first insulator (151) and a second insulator (152) which are discrete, the first insulator (151) surrounds the columnar part (142) and is at least partially clamped between the inner flange (141) and the end wall (111), at least part of the second insulator (152) surrounds the first insulator (151), and the first insulator (151) and the second insulator (152) isolate the electrode assembly (120) from the end wall (111).

2. The secondary battery (100) according to claim 1, wherein a projection of the first insulator (151) and a projection of the second insulator (152) on the end wall (111) at least partially overlap each other along a thickness direction of the end wall (111), the first insulator (151) comprises a first overlapping part (1512) that overlaps with the second insulator (152), and the second insulator (152) comprises a second overlapping part (1522) that overlaps with the first insulator (151).

3. The secondary battery (100) according to claim 2, wherein the second overlapping part (1522) is located between the first overlapping part (1512) and the end wall (111).

4. The secondary battery (100) according to claim 2, wherein the first overlapping part (1512) and the second overlapping part (1522) overlap to form a connection part (153) along the thickness direction of the end wall (111), the first insulator (151) and/or the second insulator (152) comprises a thinning structure for reducing a thickness of the connection part (153).

5. The secondary battery (100) according to claim 4, wherein the thinning structure comprises a first thinned area (1511) disposed at an outer periphery of the first insulator (151), and the first overlapping part (1512) is located in the first thinned area (1511).

6. The secondary battery (100) according to claim 5, wherein a first step (1513) that is indented in a direction away from the end wall (111) is disposed near the outer periphery on one side of the first insulator (151) facing the end wall (111), thus forming the first thinned area (1511).

7. The secondary battery (100) according to claim 6, wherein the first step (1513) comprises a first lateral surface (15131) surrounding the columnar part (142) and a first bottom wall (15132) connected to a bottom end of the first lateral surface (15131), an angle α between the first lateral surface (15131) and the first bottom wall (15132) is in a range that 90°<α<180°.

8. The secondary battery (100) according to claim 6, wherein the thinning structure comprises a second thinned area (1521) set at an inner periphery of the second insulator (152), the second overlapping part (1522) is located in the second thinned area (1521), a second step (1523) that is indented in a direction of the end wall (111) is disposed at the inner periphery of one side of the second insulator (152) facing the electrode assembly (120), thus forming the second thinned area (1521).

9. The secondary battery (100) according to claim 8, wherein the second insulator (152) further comprises a transition part (1524) that surrounds and connects the second thinned area (1521), a third step (1525) that is indented in the direction of the end wall (111) is disposed on one side of the second insulator (152) away from the end wall (111), thus forming the transition part (1524), an average thickness of the transition part (1524) is greater than an average thickness of the second thinned area (1521).

10. The secondary battery (100) according to claim 9, wherein a third thinned area (1526) is disposed at an outer periphery of the second insulator (152), and a fourth step (1527) that is indented in the direction away from the end wall (111) is disposed on one side of the second insulator (152) facing the end wall (111), thus forming the third thinned area (1526).

11. The secondary battery (100) according to claim 10, wherein the second insulator (152) further comprises a plurality of fourth thinned areas (1528), the plurality of fourth thinned areas (1528) comprise first recesses (1529) disposed on at least one side in a thickness direction of the second insulator (152), the plurality of fourth thinned areas (1528) are distributed in a radial manner at intervals in an area between the third thinned area (1526) and the transition part (1524), a first protrusion (15210) is formed between every two of the adjacent first recesses (1529).

12. The secondary battery (100) according to claim 11, wherein the plurality of fourth thinned areas (1528) comprise first recesses (1529) disposed on one side of the second insulator (152) close to the end wall (111), at least one second protrusion (15211) is formed between at least one of the plurality of fourth thinned areas (1528) and the third thinned area (1526) along a radius direction of the second insulator (152).

13. The secondary battery (100) according to claim 12, wherein a number of the at least one second protrusion (15211) is multiple, the plurality of second protrusions (15211) are disposed surrounding the third thinned area (1526), with second recesses (15212) formed between every two adjacent ones of the plurality of second protrusions (15211).

14. The secondary battery (100) according to claim 2, wherein a distance between an outer periphery of the second insulator (152) and an inner wall (114) of the housing (110) along a radius direction of the end wall (111) is c, and a length of the first overlapping part (1512) is d, where d>c.

15. The secondary battery (100) according to claim 1, wherein a heat resistance of the first insulator (151) is 240°C to 350°C, and a heat resistance of the second insulator (152) is 100°C to 200°C.
